# EUROPÄISCHE PATENTANMELDUNG

(11) **EP 1 088 614 A1**
(43) Veröffentlichungstag der Anmeldung: **04.04.2001**
(21) Anmeldenummer: 00119490.1
(22) Anmeldetag: 18.09.2000
(51) Int. Cl.: B23K 11/11, B23K 11/31, H02K 7/14

(54) **Roboterschweisszange**

(30) Priorität: 30.09.1999 DE 29917213 U; 06.10.1999 DE 19948043
(71) Anmelder: NIMAK Automatisierte Schweisstechnik GmbH, 57537 Wissen (DE)
(72) Erfinder: Nickel, Paul Gerhard, 57531 Wissen (DE)
(74) Vertreter: Patentanwälte Dr. Solf & Zapf

(57) **Zusammenfassung**

Die Erfindung betrifft eine Roboterschweißzange, bestehend aus zwei Zangenarmaturen mit jeweils einer Schweißelektrode, die relativ zueinander im Sinne einer Abstandsveränderung zwischen den Enden der Schweißelektroden in ihrer Lage mittels einer Antriebsvorrichtung (5) veränderlich sind. Die Antriebsvorrichtung besteht aus einer mit einer Schweißelektrodenarmatur (1) drehfest verbundenen Gewindespindel (6), die in einer Spindelmutter (7) geführt ist, die Teil eines Rotors (8) eines Antriebsmotors (9) ist.

## Beschreibung

Die vorliegende Erfindung betrifft eine Roboterschweißzange, bestehend aus zwei Zangenarmaturen mit jeweils einer Schweißelektrode, die relativ zueinander im Sinne einer Abstandsveränderung zwischen den Enden der Schweißelektroden in ihrer Lage mittels einer Antriebsvorrichtung veränderlich sind.

Bei derartigen bekannten Roboterschweißzangen erfolgt die Umsetzung der Motor-Drehbewegung in eine lineare Hin- und Herbewegung durch Zwischengetriebe, wodurch sich ein hoher Gewichtsanteil ergibt. Auch ist es bekannt, derartige Schweißzangen durch Pneumatik-Zylindereinheiten anzutreiben. Derartige Antriebe besitzen hohe Herstellungskosten, zudem bestehen Probleme in bezug auf Prallschlag und die Ansprechgeschwindigkeit dieser Antriebseinheiten.

Der vorliegenden Erfindung liegt die Aufgabe zugrunde, eine Antriebseinheit für eine Roboterschweißzange zu schaffen, die reduzierte Herstellungskosten mit einem verbesserten Handling verbindet.

Erfindungsgemäß wird dies dadurch erreicht, dass die Antriebsvorrichtung aus einer drehfest mit der Schweißelektrodenarmatur verbundenen Gewindespindel besteht, die in einer Spindelmutter geführt ist, die ihrerseits Teil eines Rotors eines Antriebsmotors ist. Insbesondere ist der Antriebsmotor als elektrischer Servomotor mit einem Hohlwellenrotor ausgebildet, in dem die Spindelmutter eingebracht ist. Die Gewindespindel und die Spindelmutter bilden vorzugsweise einen Kugelgewindetrieb.

Erfindungsgemäß erfolgt die Umsetzung der Motor-Drehbewegung in eine lineare Hin- und Herbewegung ohne Zwischengetriebe. Denn die Kugelrollspindel wird in die Motorachse der Kugelrollmutter eingesetzt. Hierbei dreht sich der Motor äußerlich nicht, sondern er schiebt die Spindel aus und ein wie bei einem Pneumatikzylinder. Da die Kugelrollspindel verdrehgesichert mit der Roboterzangenarmatur verbunden ist, ergibt sich eine lineare Aus- und Einwärtsbewegung der Spindel.

Bei dem erfindungsgemäß verwendeten Servomotor handelt es sich um einen 3-phasigen, 6-poligen Servomotor. Durch diesen Servomotorantrieb in Verbindung mit dem erfindungsgemäßen Spindeltrieb erfolgt eine schnellere und präzisere Bewegung der Roboterschweißzange. Ein erfindungsgemäßer Motor ist wartungsarm und hat eine hohe Lebensdauer.

Weiterhin ist erfindungsgemäß vorgesehen, dass der Verfahrweg der Spindel und die Motorkraft unabhängig voneinander in einer programmierbaren Steuerung gesteuert bzw. geregelt werden können. Durch einen im inneren der Motorantriebseinheit vorgesehenen Resolver, d.h. einen induktiven Drehgeber, können die Öffnungs- und Schließbewegungen der Zangenarmaturen bestimmt und kontrolliert werden, und zwar entsprechend den jeweils gewünschten Vorgaben.

Anhand der in den beiliegenden Zeichnungen dargestellten Ausführungsform der Erfindung wird diese näher erläutert. Es zeigen:

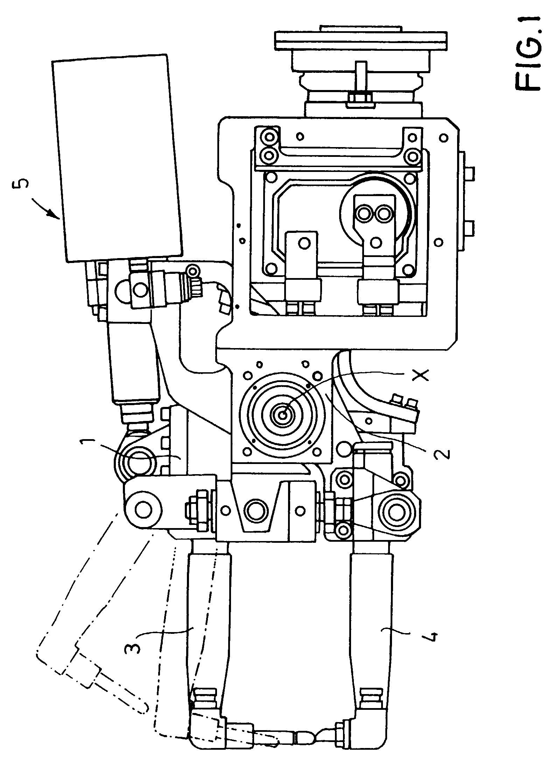

- Fig. 1: eine Prinzip-Darstellung einer erfindungsgemäßen Schweißzange,

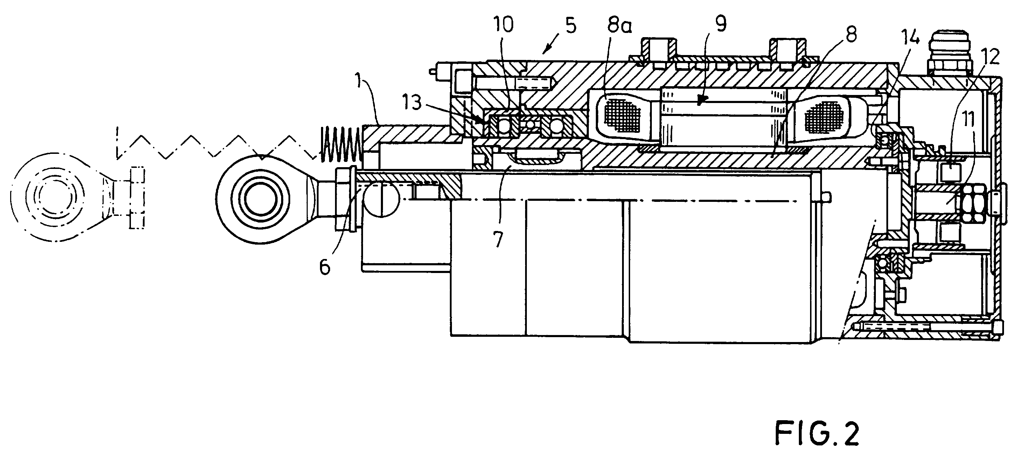

- Fig. 2: einen Schnitt durch die erfindungsgemäße Antriebseinheit und
- Fig. 3: ein Schaubild eines Funktionszyklus einer erfindungsgemäßen Schweißzange.

Eine erfindungsgemäße Roboterschweißzange besteht aus zwei Zangenarmaturen 1, 2 mit jeweils einer Schweißelektrode 3, 4, die relativ zueinander im Sinne einer Abstandsveränderung zwischen den Enden der Schweißelektroden 3, 4 in ihrer Lage mittels einer Antriebsvorrichtung 5 veränderlich sind. Im vorliegenden Fall sind die Zangenarmaturen 1, 2 derart ausgebildet, dass sie um eine Schwenkachse X eine Schwenkbewegung relativ zueinander durchführen können. Eine erfindungsgemäße Antriebsvorrichtung 5 besteht aus einer mit der Zangenarmatur 1 drehfest verbundenen Gewindespindel 6, die in einer Spindelmutter 7 geführt ist. Die Spindelmutter 7 ist Teil eines Rotors 8 der Antriebseinheit 5. Der Rotor 8 ist Bestandteil eines Antriebsmotors 9, der als elektrischer Servomotor ausgebildet ist. Der Stator 8a des Servomotors 9 ist an der Zangenarmatur 1 befestigt. Der Rotor 8 ist als Hohlwellenrotor ausgebildet, in dem die Spindelmutter 7 eingebracht ist. Hierzu besitzt der Hohlwellenrotor 8 einen im Durchmesser erweiterten Zylinderfortsatz 10, in dem die Spindelmutter 7 kraft- und formschlüssig eingesetzt ist. An ihrem innerhalb des Hohlwellenrotors 8 liegenden Ende weist die Gewindespindel 6 einen Zapfen 11 auf, auf dem eine Gleitlager-Radiallagereinheit 12 befestigt ist. Diese integrierte Gleit- und Radiallagerkombination 12 nimmt über das Gleitlager die Axialbewegung der Gewindespindel 6 innerhalb der Rotorhohlwelle 8 auf, und die Radiallageranordnung nimmt die Drehung des Hohlwellenrotors 8 auf, und zwar bei voller Belastbarkeit mit den auftretenden Querkräften am Spindelende. Der Hohlwellenrotor 8 ist auf der Zangenseite mit Axial- und Radiallagern 13 versehen, die getrennt die entsprechenden Kräfte aufnehmen. Auf der anderen Seite des Motors wird die Lagerung durch ein schwimmendes Radiallager 14 bewirkt.

Die aus der Gewindespindel 6 und der Spindelmutter 7 gebildete Antriebseinheit ist vorteilhafterweise als Kugelgewindetrieb ausgebildet. Je nach Drehrichtung des Rotors 8 wird die Spindel 6 aus dem Rotor 8 heraus oder in ihn hinein gefahren.

Der erfindungsgemäße Servomotor ist vorteilhafterweise als 3-phasiger, 6-poliger Elektromotor ausgebildet. Im inneren der Motoreinheit ist an dem Hohlwellenrotor 8 ein vorzugsweise 2-poliger Resolver, d.h. induktiver Weggeber, angeordnet. Hiermit kann entsprechend der Drehung des Hohlwellenrotors 8 eine Steuerung mittels einer programmierbaren Steuereinheit der Motorkraft und der Positionierung der Schweißzangen erfolgen. Die erfindungsgemäße programmierbare Steuereinheit erlaubt eine Steuerung des Servomotors in Abhängigkeit von der Stromstärke und zudem eine Positionierungssteuerung für an das jeweilige zu verschweißende Werkstück angepaßte Öffnungs- und Schließwege der Roboterzangen.

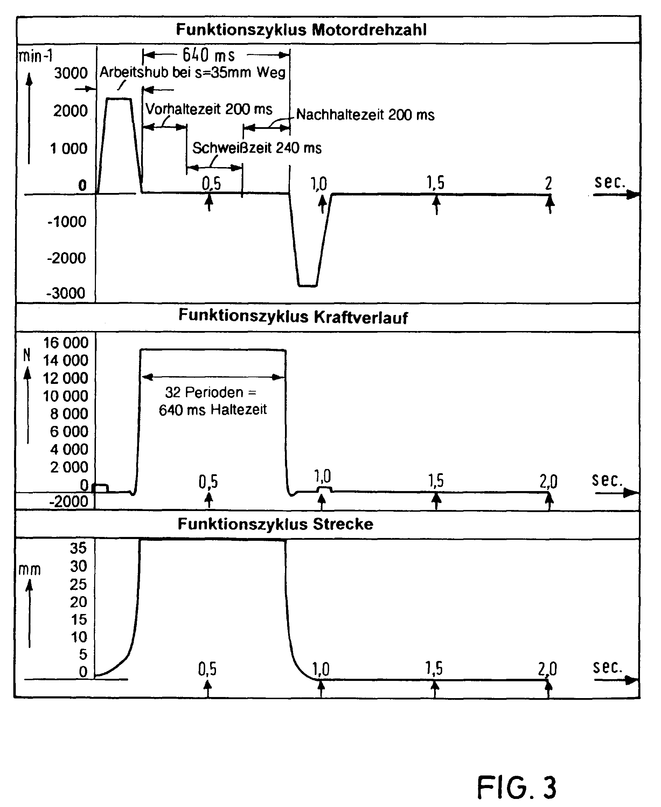

Aus dem beiliegenden Funktionszyklus (Fig. 3) ist der Kraftverlauf bei der Verwendung eines erfindungsgemäßen Servoantriebs zu erkennen. Es ist der sehr steile Kraftanstieg entnehmbar, der beim Aufsetzen der Elektrode auf dem zu verschweißenden Gegenstand auftritt. Weiterhin ist erkennbar der zeitmäßig kurze Arbeitshub.

Die vorliegende Erfindung hat insbesondere auch die Vorteile, dass die Öffungs- und Schließwege individuell dem Werkstück angepaßt werden können und die gesamte Einrichtung an jedem handelsüblichen Roboter angeschlossen und betrieben werden kann. Auch ist es möglich, die gesamte Einrichtung gegen pneumatische Antriebseinheiten auszutauschen.

Die erfindungsgemäße Roboterschweißzange zeichnet sich durch eine hohe Prozeßsicherheit aus, wodurch ein gesteigertes Qualitätsniveau erreicht wird. Es ist eine kontinuierliche Schweißkraft vorhanden. Zudem können kurze, dem Werkstück angepaßte Schließ- und Öffnungswege eingestellt werden, wobei schnellere Öffnungs- und Schließgeschwindigkeiten erreichbar sind. Es wird eine hohe Schweißqualität durch einen gleichmäßigen Schweißlinsendurchmesser erreicht. Da kein Prallschlag auftritt, treten keine Blechverformungen und geringere Materialbelastungen auf. Zudem ist die erfindungsgemäße Roboterschweißzange wartungsarm und energiesparend, da teure Druckluftenergien nicht eingesetzt werden müssen.

## Patentansprüche

1. Roboterschweißzange, bestehend aus zwei Zangenarmaturen (1, 2) mit jeweils einer Schweißelektrode (3, 4), die relativ zueinander im Sinne einer Abstandsveränderung zwischen den Enden der Schweißelektroden (3, 4) in ihrer Lage mittels einer Antriebsvorrichtung (5) veränderlich sind,
**dadurch gekennzeichnet,** dass die Antriebsvorrichtung aus einer mit einer Schweißelektrodenarmatur (1) drehfest verbundenen Gewindespindel (6) besteht, die in einer Spindelmutter (7) geführt ist, die Teil eines Rotors (8) eines Antriebsmotors (9) ist.

2. Roboterschweißzange nach Anspruch 1,
**dadurch gekennzeichnet**, dass der Antriebsmotor (9) aus einem elektrischen Servomotor besteht und einen Hohlwellenrotor (8) aufweist, in dem die Spindelmutter (7) eingebracht ist.

3. Roboterschweißzange nach Anspruch 1 oder 2,
**dadurch gekennzeichnet**, dass die Gewindespindel (6) und die Spindelmutter (7) einen Kugelgewindetrieb bilden.

4. Roboterschweißzange nach einem der Ansprüche 1 bis 3,
**dadurch gekennzeichnet**, dass der Servomotor als 3-phasiger, 6-poliger Elektromotor ausgebildet ist.

5. Roboterschweißzange nach einem der Ansprüche 1 bis 4,
**dadurch gekennzeichnet**, dass an dem Hohlwellenrotor (8) ein 2-poliger Resolver vorgesehen ist.

6. Roboterschweißzange nach einem der Ansprüche 1 bis 5,
**dadurch gekennzeichnet**, dass der Antriebsmotor (9) in Abhängigkeit von der Stromstärke regelbar bzw. steuerbar ist und damit unterschiedliche Kräfte erzeugt werden können.

7. Roboterschweißzange nach einem der Ansprüche 1 bis 6,
**dadurch gekennzeichnet,** dass die Antriebsvorrichtung (5) einen Wechselstrom-Servo-Regler mit programmierbarer Positionssteuerung aufweist.

8. Roboterschweißzange nach einem der Ansprüche 1 bis 7,
**dadurch gekennzeichnet,** dass die Elektrodenstellung der Schweißelektroden (3, 4) zueinander mittels einer Steuereinheit frei programmierbar ist.
